# EUROPÄISCHE PATENTSCHRIFT

(11) **EP 2 656 966 B1**
(45) Veröffentlichungstag und Bekanntmachung des Hinweises auf die Patenterteilung: **25.12.2019**
(21) Anmeldenummer: 13165088.9
(22) Anmeldetag: 24.04.2013
(51) Int. Cl.: B23Q 1/01, B23Q 17/12, G05B 19/404

(54) **Bearbeitungsmaschine mit Schwingungsdämpfungssystem**
Working machine with vibration damping system
Machine de traitement avec système d'amortissement de vibrations

(30) Priorität: 27.04.2012 DE 102012207110
(43) Veröffentlichungstag der Anmeldung: 30.10.2013
(73) Patentinhaber: HOMAG GmbH, 72296 Schopfloch (DE)
(72) Erfinder: Gringel, Martin, 72479 Straßberg (DE)
(74) Vertreter: Hoffmann Eitle

(56) Entgegenhaltungen:
- EP-A1- 1 810 776
- EP-A2- 0 974 882
- DE-A1-102009 008 900
- US-A- 4 810 941
- US-A- 5 432 423

## Beschreibung

### Technisches Gebiet

Die vorliegende Erfindung betrifft ein System zur Schwingungsdämpfung für Bearbeitungsmaschinen, die rein beispielhaft zur Herstellung von Möbelteilen oder Elementen für die Bauelementeindustrie verwendet werden.

### Stand der Technik

In diesem Bereich sind Fahrportalmaschinen sowie Auslegermaschinen bekannt. Fahrportalmaschinen weisen ein Führungselement auf, das beidseitig an einem Maschinenbett gelagert ist und aufgrund dieser Ausgestaltung relativ steif und genau ausführbar ist. Üblicherweise werden an beiden Seiten der Führungseinrichtung Vorschubantriebe vorgesehen. Diese Vorschubantriebe sind gängigerweise als Master-Slave-Antriebe ausgeführt, wodurch eine hohe Genauigkeit der Verstellbewegung der Führungseinrichtung in Vorschubrichtung sowie eine Achsdynamik erreicht wird.

Ferner sind solche Bearbeitungsmaschinen mit einer Lage-Isterfassung ausgestattet, die beispielsweise als ein in die Vorschubmotoren integriertes Wegmesssystem realisiert wird (sogenannte indirekte Lage-Isterfassung). Auch bekannt sind sogenannte Linearmesssysteme zur lagegenauen Isterfassung, die im Falle von hohen Anforderungen an die Positioniergenauigkeit der Führungseinrichtung eingesetzt werden.

Allerdings haben solche Antriebskonzepte den Nachteil, dass für den Slaveantrieb zusätzliche Kosten anfallen, da es sich bei dem Slaveantrieb um ein vollständiges Achssystem mit im Wesentlichen den gleichen elektrischen und mechanischen Komponenten handelt wie bei einem Masterantriebssystem.

Um die Kosten für den zusätzlichen Slaveantrieb einzusparen, werden gegenwärtig vermehrt Bearbeitungsmaschinen mit lediglich einem Antriebssystem (Masterantrieb) hergestellt. Bei solchen Bearbeitungsmaschinen müssen jedoch Nachteile bei der Positioniergenauigkeit in Vorschubrichtung sowie eine reduzierte Achsdynamik in Kauf genommen werden.

Ein weiterer Nachteil bei einem einseitigen Achsantrieb zeigt sich im mechanischen Schwingungsverhalten der Führungseinrichtung. Die erste Eigenfrequenz der bewegten Komponenten liegt deutlich niedriger als bei Bearbeitungsmaschinen mit einem beidseitigen Antrieb, da das System eine geringere Gesamtsteifigkeit aufweist. Darüber hinaus ist neben der niedrigeren ersten Eigenfrequenz auch mit deutlich höheren Amplituden bei dieser Frequenz zu rechnen. Diese Faktoren wirken sich letztlich negativ auf das Bearbeitungsergebnis aus, da durch die Schwingungen hervorgerufene Rattermarken zu Qualitätseinbußen am Werkstück führen.

Die zuvor angesprochenen einseitigen Fahrportale weisen oftmals ein indirektes Messsystem zur Lage-Isterfassung auf, welches auf der Motorwelle des Vorschubantriebsmotors montiert ist. Somit sind alle Übertragungselemente, wie z.B. Kupplungen, Getriebe, Kugelrollspindeln usw. außerhalb der Regelstrecke. Dies bringt den Nachteil mit sich, dass zwischen der TCP-und der Lage-Isterfassung durch das Vorschubantriebsmotor-System eine Mechanik mit langen Kraftpfaden liegt.

Deshalb können Resonanzfrequenzen der Maschinenmechanik, die beispielsweise durch eine Achsbeschleunigung oder durch einen Zahneingriff einer Bearbeitungsspindel beim Fräsen angeregt werden, oftmals mit den beschriebenen indirekten Messsystem auf der Motorwelle des Vorschubantriebs nicht erfasst werden. Darüber hinaus können quasistatische Verformungen der Frontalachse auftreten, wenn einerseits mit konstanten Achsbeschleunigungen Geschwindigkeitsänderungen der Portalachse ausgeführt werden, oder andererseits Prozesskräfte beispielsweise durch die Zerspanung auftreten.

Diese Faktoren führen dazu, dass die mit einer bekannten Bearbeitungsmaschine erreichte Dynamik und Bearbeitungsgenauigkeit begrenzt ist.

Als druckschriftlicher Stand der Technik ist die DE 102 46 093 C1 bekannt, die ein Verfahren zur Dämpfung mechanischer Schwingungen von Achsen von Werkzeugmaschinen, Produktionsmaschinen und Robotern betrifft. In einem beschriebenen Ausführungsbeispiel treibt ein Motor über eine Mechanik eine Achse einer Maschine an. Eine Motoristdrehgeschwindigkeit und ein Lageistwert der Achse werden mit Hilfe von geeigneten Messsystemen gemessen. Die Motoristdrehgeschwindigkeit wird mit Hilfe eines Motordrehzahlreglers, der als Eingangsgröße die Differenz der Motoristdrehgeschwindigkeit und einer Motorsolldrehgeschwindigkeit einliest, und ausgangsseitig ein Reglerausgangssignal an eine Motorsteuerung abgibt, welche über einen Ausgangsstrom die Motordrehgeschwindigkeit des Motors steuert, geregelt.

Als weiterer druckschriftlicher Stand der Technik ist die US 5,432,423 A1 bekannt, die ein Dämpfungssystem zeigt, bei dem ein

Drehgeschwindigkeitssensor Werte ermittelt, die einer Steuereinheit zugeführt werden.

Die DE 10 2009 008 900 A1 betrifft eine Regeleinrichtung für einen Portalrahmen mit einem Träger, an dem ein Kopf verstellbar gelagert ist und von dem jedes Ende ein lineares Antriebsmittel enthält. Die Regeleinrichtung weist eine Überwachungsvorrichtung auf, die dazu bestimmt ist, die Zielposition des Kopfes vorzugeben, sowie einen Sollwertgenerator, der dazu bestimmt ist, die Zielposition eines jeden der Antriebsmittel vorzugeben.

Ferner ist die US 4,810,941 A1 zu nennen, die ein Steuersystem für einen Servomotor zeigt.

### Gegenstand der Erfindung

Die vorliegende Erfindung wurde durchgeführt, um die oben genannte Problematik bei Bearbeitungsmaschinen mit einem Antrieb zu beheben.

Dieses Ziel wird durch eine Bearbeitungsmaschine gemäß Anspruch 1 gelöst. Weitere vorteilhafte Ausgestaltungen sind den abhängigen Ansprüchen zu entnehmen.

Gemäß der vorliegenden Erfindung wird eine Bearbeitungsmaschine bereitgestellt, die die Merkmale des Anspruchs 1 aufweist. Mit dem Beschleunigungssensor kann die Frequenz und Amplitude insbesondere der ersten Eigenfrequenz ermittelt werden.

Durch den beschriebenen Aufbau der erfindungsgemäßen Bearbeitungsmaschine ist es möglich, insbesondere die Amplituden der ersten Eigenfrequenz zu ermitteln und auf Grundlage dieses Ergebnisses die Antriebsgröße des Antriebs zu beeinflussen. Dabei wird die eigentliche Antriebsbewegung mit der vorliegenden Amplitude überlagert, und auf diese Weise gedämpft.

Der zumindest eine Sensor kann dabei beispielsweise den Lageistwert am Messort erfassen, und aus dem Lageistwert wird durch Differenzierung eine Istgeschwindigkeit bestimmt.

In einer bevorzugten Ausführungsform ist das Führungselement über einen ersten Träger und einen zweiten Träger über Führungsschienen mit dem Grundkörper in Kontakt.

Ferner können die Führungsschienen eine erste Führungsschiene und eine zweite Führungsschiene aufweisen, die an entgegengesetzten Seiten des Grundkörpers angebracht sind. Der Antrieb greift in diesem Fall bevorzugt an einem der Kontaktbereiche zwischen der ersten/zweiten Führungsschiene und dem Führungselement an.

In einer weiteren Ausführungsform ist die Bearbeitungseinheit über einen entlang des Führungselements bewegbaren Schlitten am Führungselement angebracht, und auf diese Weise eigenständig gegenüber dem Führungselement bewegbar.

Beim genannten Sensor handelt es sich um einen Beschleunigungssensor.

Gemäß einer bevorzugten Ausführungsform ist die Bearbeitungseinheit in einem Bereich zwischen dem Sensor und dem Antrieb entlang des Führungselements verfahrbar.

Die vorliegende Erfindung nimmt auf eine Bearbeitungsmaschine Bezug, und in der nachfolgend erläuterten Ausführungsform wird eine Fahrportalmaschine als Beispiel für eine Bearbeitungsmaschine dargestellt. Neben der dargestellten Portalmaschine kann die vorliegende Erfindung jedoch auch bei einer Auslegemaschine, einem Roboter oder einer Stabkinematikmaschine zur Anwendung kommen.

In einer Ausführungsform betrifft die vorliegende Erfindung auch eine als Durchlaufmaschine ausgestattete Bearbeitungsmaschine. Eine solche Bearbeitungsmaschine kann beispielsweise mit einer endlos umlaufenden Werkstücktransportkette ausgestattet sein, beispielsweise einer sogenannten Doppelendprofiler mit einer oder zwei aus Kettengliedern ausgebildeten Führungsketten als umlaufende Werkstückauflage.

In einer bevorzugten Ausführungsform der vorliegenden Erfindung ist die Bearbeitungseinheit in einem Bereich zwischen dem Sensor und dem Antrieb entlang des Führungselements verfahrbar. Daraus ergibt sich, dass neben der Dynamik des Führungselements auch die Dynamik der entlang des Führungselements bewegten Bearbeitungseinheit zu beachten ist. Aus diesem Grund kann es besonderes bevorzugt vorgesehen sein, sowohl am Führungselement, als auch an der Bearbeitungseinheit einen Sensor anzubringen, die jeweils mit der Steuereinrichtung in Verbindung stehen. Auf diese Weise werden die von den Sensoren ermittelten Daten in der Steuereinrichtung überlagert und dazu genutzt, die Bewegung des Führungselements noch gezielter zu regeln.

In einer weiteren Zielrichtung könnte es vorgesehen sein, die mit dem Sensor am Führungselement ermittelten Daten für die Steuerung der Bewegung des Führungselements zu nutzen, und die Daten, die vom Sensor an der Bearbeitungseinheit ermittelt wurden, für den Antrieb der Bearbeitungseinheit entlang des Führungselements zu nutzen.

### Kurze Beschreibung der Zeichnungen

- Figur 1: ist eine Seitensicht einer Fahrportalmaschine
- Figur 2: ist eine weitere von der linken Seite in Figur 1 betrachtete Seitenansicht der Fahrportalmaschine gemäß der vorliegenden Ausführungsform

### Detaillierte Beschreibung der bevorzugten Ausführungsform

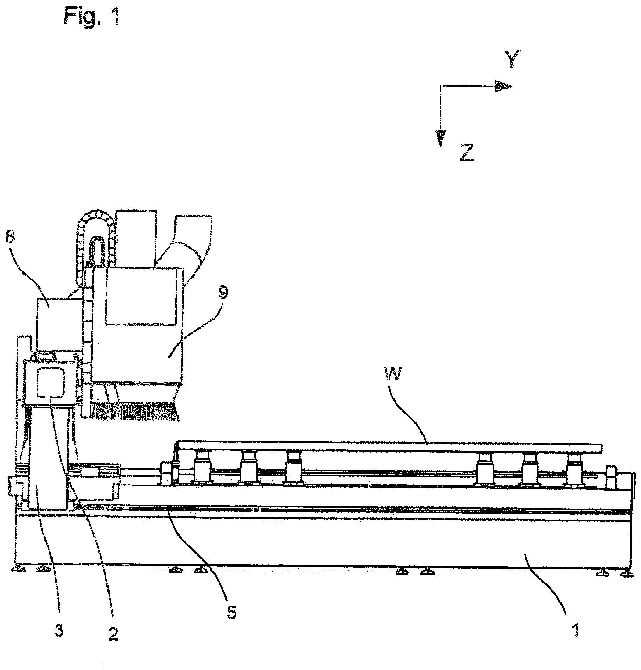

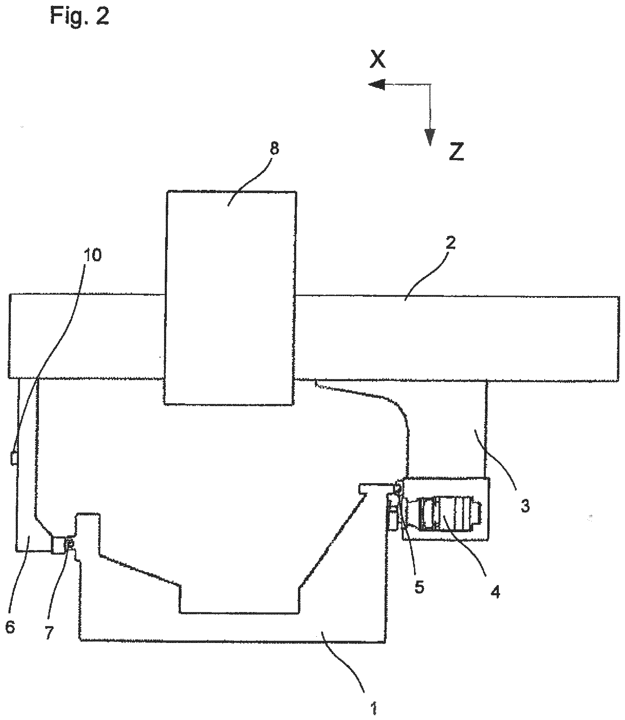

Die in den Figuren 1 und 2 dargestellte Fahrportalmaschine weist einen Grundkörper 1 sowie ein Portal (Führungselement) 2. Das Portal 2 ist über eine erste Führungsschiene 5 und eine zweite Führungsschiene 7 mit dem Grundkörper in Kontakt, und somit entlang des Grundkörpers 1 verfahrbar (Y-Richtung).

Am Portal 2 ist ein Schlitten 8 mit einer Bearbeitungseinheit 9 angebracht, der entlang des Portals 2 verfahrbar ist (X-Richtung). Die Bearbeitungseinheit 9 ist mit einem Bearbeitungswerkzeug (beispielsweise einem Fräser, einer Säge oder ähnlichem) versehen, um ein an der Basis 1 aufgespanntes Werkstück W zu bearbeiten.

Die Führung des Portals 2 entlang dem Grundkörper 1 wird über einen ersten Träger 6, der mit der ersten Führungsschiene 7 in Verbindung steht, und einem zweiten Träger 3, der mit der zweiten Führungsschiene 5 in Verbindung steht, sichergestellt. Am zweiten Träger 3 ist ein Antrieb 4 (Masterantrieb) vorgesehen, der die Verfahrbarkeit des Portals 2 gegenüber dem Grundkörper 1 bereitstellt. Am ersten Träger 6 hingegen ist kein weiterer Antrieb (Slaveantrieb) vorgesehen. Dies bedeutet, dass die vorliegende Fahrportalmaschine eine sogenannte einseitig angetriebene Fahrportalmaschine ist.

Am ersten Träger 6, der keinen eigenen Antrieb aufweist, ist ein Beschleunigungssensor 10 angebracht. Dieser Beschleunigungssensor 10 dient zur Messung der Schwingungsbewegung bzw. der Deflektion am Träger 6. Der Beschleunigungssensor kann jedoch auch am Portal 2, am ersten Träger 6 oder am zweiten Träger 3 angebracht sein.

Der Beschleunigungssensor 10 ist Teil eines Regelsystems, das auf Grundlage des Erfassungsergebnisses des Beschleunigungssensors 10 die Bewegung des Antriebs 4 beeinflusst. Durch diese Einwirkung kann eine aktive Dämpfung kritischer Eigenfrequenzen der verfahrbaren Komponenten der Bearbeitungsmaschine erreicht werden. Insbesondere wird durch die gezielte Ansteuerung der Bewegung am Motor dem Gesamtsystem Schwingungsenergie entzogen.

## Patentansprüche

1. Bearbeitungsmaschine zur Bearbeitung von Werkstücken, mit:
einem Grundkörper (1), einem entlang des Grundkörpers (1) bewegbaren Führungselement (2, 3, 6), und einer am Führungselement (2, 3, 6) angebrachten Bearbeitungseinheit (9), wobei
das Führungselement (2) mit einem Antrieb (4), der an einer Lagerung des Führungselements (2, 3, 6) am Grundkörper (1) vorgesehen ist, relativ gegenüber dem Grundkörper (1) angetrieben wird, und ferner zumindest ein Sensor (10) am Führungselement (2, 3, 6) angebracht ist,
eine Steuereinrichtung auf Grundlage des Erfassungsergebnisses des Sensors eine Antriebsgröße des Antriebs (4) steuert,
und die Bearbeitungseinheit (9) zumindest abschnittsweise zwischen dem Sensor (10) und dem Antrieb (4) am Führungselement (2, 3, 6) angebracht ist,
wobei
der Sensor ein Beschleunigungssensor ist.

2. Bearbeitungsmaschine gemäß Anspruch 1, bei der das Führungselement über einen ersten Träger (6) und einen zweiten Träger (3) über Führungsschienen (5, 7) mit dem Grundkörper (1) in Kontakt steht.

3. Bearbeitungsmaschine gemäß Anspruch 2, bei der die Führungsschienen eine erste Führungsschiene (7) und eine zweite Führungsschiene (5) aufweisen, die an entgegengesetzten Seiten des Grundkörpers (1) angebracht sind.

4. Bearbeitungsmaschine gemäß einem der vorangegangenen Ansprüche, bei der die Bearbeitungseinheit (9) über einen entlang des Führungselements (2, 3, 6) bewegbaren Schlitten (8) am Führungselement (2, 3, 6) angebracht ist.

5. Bearbeitungsmaschine gemäß einem der vorangegangenen Ansprüche, **dadurch gekennzeichnet, dass** der Beschleunigungssensor (10) an einem Abschnitt des Führungselements (2, 3, 6) angebracht ist, der an einem vom Antrieb (4) entfernt gelegenen Ende befindlich ist.

6. Bearbeitungsmaschine gemäß einem der vorangegangenen Ansprüche, **dadurch gekennzeichnet, dass** die Bearbeitungsmaschine eine Fahrportalmaschine mit einem einseitig angetriebenen Fahrportal ist.

7. Bearbeitungsmaschine gemäß einem der vorangegangenen Ansprüche, **dadurch gekennzeichnet, dass** die Bearbeitungsmaschine eine Linearportalmaschine, eine Auslegermaschine, ein Roboter, eine Stabkinematikmaschine oder ein Aggregat für eine Durchlaufmaschine ist.

8. Bearbeitungsmaschine gemäß einem der vorangegangenen Ansprüche, **dadurch gekennzeichnet, dass** die Bearbeitungseinheit (9) abschnittsweise in einem Bereich zwischen dem Sensor (10) und dem Antrieb (4) entlang des Führungselements verfahrbar ist.

9. Bearbeitungsmaschine gemäß einem der vorangegangenen Ansprüche, **dadurch gekennzeichnet, dass** zumindest zwei Sensoren am Führungselement (2, 3, 6) angebracht sind, und die Steuereinheit das Erfassungsergebnis der Sensoren abgleicht und ggf. interpoliert.

## Claims

1. Machining apparatus for machining workpieces, comprising:
a base body (1), a guide element (2, 3, 6) that can move along the base body (1), and a machining unit (9) attached to the guide element (2, 3, 6), wherein
the guide element (2) is driven relative to the base body (1) by means of a drive (4), which is provided on a mounting of the guide element (2, 3, 6) on the base body (1), and at least one sensor (10) is further attached to the guide element (2, 3, 6),
a controller controls a drive variable of the drive (4) on the basis of the detection result of the sensor,
and the machining unit (9) is attached to the guide element (2, 3, 6) at least in part between the sensor (10) and the drive (4),
wherein
the sensor is an acceleration sensor.

2. Machining apparatus according to claim 1, wherein the guide element is in contact with the base body (1) via guide rails (5, 7) via a first support (6) and a second support (3).

3. Machining apparatus according to claim 2, wherein the guide rails comprise a first guide rail (7) and a second guide rail (5), which are attached on opposite sides of the base body (1).

4. Machining apparatus according to any of the preceding claims, wherein the machining unit (9) is attached to the guide element (2, 3, 6) via a carriage (8) that can move along the guide element (2, 3, 6).

5. Machining apparatus according to any of the preceding claims, **characterised in that** the acceleration sensor (10) is attached to a portion of the guide element (2, 3, 6) that is located at an end remote from the drive (4) .

6. Machining apparatus according to any of the preceding claims, **characterised in that** the machining apparatus is a moving gantry machine comprising a moving gantry driven on one side.

7. Machining apparatus according to any of the preceding claims, **characterised in that** the machining apparatus is a linear gantry machine, a cantilever machine, a robot, a parallel kinematics machine or a unit for a through-feed machine.

8. Machining apparatus according to any of the preceding claims, **characterised in that** the machining unit (9) can move along the guide element in part in a region between the sensor (10) and the drive (4).

9. Machining apparatus according to any of the preceding claims, **characterised in that** at least two sensors are attached to the guide element (2, 3, 6), and the control unit equalises and optionally interpolates the detection result of the sensors.

## Revendications

1. Machine-outil pour le traitement de pièces à usiner, avec :
un corps de base (1), un élément de guidage (2, 3, 6) mobile le long du corps de base (1), et une unité de traitement (9) fixée sur l'élément de guidage (2, 3, 6), dans laquelle
l'élément de guidage (2) est entraîné avec un entraînement (4), qui est prévu sur un palier de l'élément de guidage (2, 3, 6) sur le corps de base (1), relatif au corps de base (1), et en outre au moins un capteur (10) est fixé à l'élément de guidage (2, 3, 6),
un appareil de commande commande une intensité d'entraînement de l'entraînement (4) sur la base du résultat de détection du capteur,
et l'unité de traitement (9) est fixée à l'élément de guidage (2, 3, 6) au moins partiellement entre le capteur (10) et l'entraînement (4),
dans laquelle
le capteur est un capteur d'accélération.

2. Machine-outil selon la revendication 1, dans laquelle l'élément de guidage est en contact avec le corps de base (1) par l'intermédiaire d'un premier support (6) et d'un second support (3) via des rails de guidage (5, 7).

3. Machine-outil selon la revendication 2, dans laquelle les rails de guidage présentent un premier rail de guidage (7) et un second rail de guidage (5), qui sont fixés sur des côtés opposés du corps de base (1).

4. Machine-outil selon l'une quelconque des revendications précédentes, dans laquelle l'unité de traitement (9) est fixée à l'élément de guidage (2, 3, 6) par l'intermédiaire d'un chariot (8) mobile le long de l'élément de guidage (2, 3, 6).

5. Machine-outil selon l'une quelconque des revendications précédentes, **caractérisée en ce que** le capteur (10) d'accélération est fixé à une section de l'élément de guidage (2, 3, 6), qui se trouve à une extrémité éloignée de l'entraînement (4).

6. Machine-outil selon l'une quelconque des revendications précédentes, **caractérisée en ce que** la machine-outil est une machine à portique mobile avec un portique mobile entraîné d'un côté.

7. Machine-outil selon l'une quelconque des revendications précédentes, **caractérisée en ce que** la machine-outil est une machine à portique linéaire, une machine à flèche, un robot, une machine cinématique à tige, ou un groupe pour une machine pour le traitement en continu.

8. Machine-outil selon l'une quelconque des revendications précédentes, **caractérisée en ce que** l'unité de traitement (9) est partiellement mobile le long de l'élément de guidage dans une zone comprise entre le capteur (10) et l'entraînement (4).

9. Machine-outil selon l'une quelconque des revendications précédentes, **caractérisée en ce qu'**au moins deux capteurs sont fixés à l'élément de guidage (2, 3, 6), et au dispositif de commande ajuste et le cas échéant interpole le résultat de la détection des capteurs.
